# EUROPEAN PATENT APPLICATION

(11) **EP 2 642 434 A1**
(43) Date of publication of application: **25.09.2013**
(21) Application number: 13153061.0
(22) Date of filing: 29.01.2013
(51) Int. Cl.: G06Q 10/06

(54) **Project delivery system**

(30) Priority: 23.03.2012 IN MU07872012
(71) Applicant: Tata Consultancy Services Limited, 400021 Mumbay (IN)
(72) Inventor: Lal, Manoj Kumar, 560017 Bangalore (IN)
(74) Representative: Malm, Åsa

(57) **Abstract**

Systems and methods for managing projects are described herein. In one implementation, the computer implemented method for delivering projects includes obtaining project detail components comprising at least one of a project scope definition, a project business requirements set, a project technical requirements set and a project test requirements set. The method further includes retrieving at least one project analysis rule, pertaining to the project, wherein the at least one project analysis rule integrates a plurality of the project detail components of the project details; analyzing the project detail components, based on the at least one project analysis rule; and determining, based on the analyzing, an inconsistency parameter, indicative of inconsistencies present in at least one of the project scope definition, the project business requirements set, and the project technical requirements set. The method further comprises creating a system design report for completion the project based in part on the analyzing.

## Description

### TECHNICAL FIELD

The present subject matter relates, in general, to project management and, in particular, to systems and methods for managing end to end processes in a project.

### BACKGROUND

Organizations usually classify their business related activities into various projects. A project may be considered to include a collection of activities and tasks designed to achieve a specific goal of an organization, with pre-defined performance or quality requirements, while meeting time and cost constraints; and is usually allocated to a group of project members.

Any project in an organization has multiple stages, such as initiation; planning and design; execution and construction; monitoring and controlling; and completion. The techniques of project management usually involve planning, organizing, securing, and managing resources to achieve specific goals of the organization. A project is usually constrained by time, resources and deliverables. Generally, the primary objective of project management techniques is to achieve all of the project goals and objectives within the constraints, such as scope, time, and budget. The techniques of project management also aim to optimize the allocation and utilization of resources.

Project management usually include project planning, wherein the scope of the project is estimated, the effort that may be involved in completing the project may be estimated, and a project schedule may be generated. The project planning also aims to ensure that all the requirements or expectations from the project are covered and usually generate a project plan, which depicts the various activities and tasks that may lead to completion of the project within the constraints of time and resources.

Further, the progress of the project may be monitored at regular intervals so as to keep the various stakeholders updated on the project, and to ensure that the project does not deviate from the project plan. The conventional project monitoring techniques usually involve status meetings to gather status from the project members and take corrective actions in case of deviation of the project from the project plan.

### SUMMARY

This summary is provided to introduce concepts related to systems and methods of managing projects in an organization and the concepts are further described below in the detailed description. This summary is neither intended to identify essential features of the claimed subject matter nor is it intended for use in determining or limiting the scope of the claimed subject matter.

In one implementation, the computer implemented method for delivering projects in an organization includes obtaining project detail components comprising at least one of a project scope definition, a project business requirements set, a project technical requirements set and a project test requirements set. The method further includes retrieving, from a rule repository, at least one project analysis rule, pertaining to the project, wherein the at least one project analysis rule integrates a plurality of the project detail components of the project details; analyzing the project detail components, based on the at least one project analysis rule; and determining, based on the analyzing, an inconsistency parameter, indicative of inconsistencies present in at least one of the project scope definition, the project business requirements set, and the project technical requirements set. The method further comprises creating a system design report for completion the project based in part on the analyzing.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.

Figure 1 illustrates a network environment implementing a project delivery system, according to an embodiment of the present subject matter.

Figure 2a illustrates the project delivery system, according to an embodiment of the present subject matter.

Figure 2b, Figure 2c, and Figure 2d depict various user interfaces generated by the project delivery system, according to an embodiment of the present subject matter.

Figure 3 illustrates an exemplary method of managing projects in an organization, according to an embodiment of the present subject matter.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

Systems and methods of managing projects in an organization, such as an IT organization, are described herein. The systems and methods can be implemented in a variety of computing systems. Examples of such computing systems include, but are not restricted to, mainframe computers, workstations, personal computers, desktop computers, minicomputers, servers, multiprocessor systems, laptops, network servers, and the like.

Organizations, for example, IT organizations usually classify their business related activities into various projects. A project is usually allocated to a group of project members. The project members may include professionals having varied expertise and competencies, such as business analysts, system architects, software developers, software testers, and database designers. The project team members are usually headed by a project leader, and/or a project manager. The project manager may be understood to be a professional in the field of project management, having the responsibility of the planning, execution, and closing of any project. The projects undertaken by organizations, such as computer application development projects, telecom projects, and chip designing projects, involve a myriad of tasks and activities that need to be completed in order to process the project through from the requirement ascertaining stage, the planning stage to the build/implementation stage and subsequent approval and reporting stages.

For illustration, an organization involved information technology (IT) sales and services may undertake several projects for its clients. These projects may be varied in nature, for example, from building an online banking system for a financial institute to designing an e-commerce portal for an enterprise. Each of these projects involve understanding the customer requirements of the clients or the business requirements of a client; translating these business requirements into technical requirements; allocating a team of experts or project members that can design software applications to meet such technical requirements and so on. The technical requirements may be understood to be a set of user interfaces, business rules, report generation, etc., that the project members have to develop for the client. Each of the aforementioned steps is interdependent and is important to ensure the successful completion of the project. For example, if the business requirements of the client are not completely captured or not accurately mapped to technical requirements, the project may need rework. This may not only involve extra man hours and overshooting the timeline and budget but also dissatisfaction to the client.

Thus the success of the project is determined by how well the project is planned such that requirements of all the stakeholders are met without violating any constraint. In large IT organizations, numerous projects are undertaken. Effective management of these numerous projects directly translates into profit for these IT organizations.

The conventional techniques of project management involve minimal or manual tracking of data. Usually the tracking of data is done using sheets and documents which are difficult and time consuming to prepare, review, maintain and trace in a project environment. This results in lack of traceability, in terms of business requirements, technical requirements, and technical constraints of projects. Thus, when an organization is assigned a new project, the organization is rarely able to use business intelligence and knowledge acquired by completing similar projects is the past. The failure to leverage business intelligence acquired in the past is primary caused due to failure to capture various details pertaining to the completed projects. Thus a new project has to be re-engineered from the start. For example, a project, similar to a current project being undertaken, may have been developed in the past. In this case the current project members are rarely able to collect information on the previous project, like issues in developing the project, steps taken to resolve the issues, and so on.

Moreover, many of the tasks and activities associated with a project are done manually. These various tasks include, but are not limited to, drafting and cataloging technical requirements; validation of business requirements; translation of business requirements into technical requirements; collaboration with business partners or clients to understand project dependencies; disposition of each business and technical requirements; and auditing of the project. Usually, on completion of certain tasks, such as technical requirement documentation, the same is required to be validated and approved by stakeholders, say a project leader or a client representative. The approved documents are usually base-lined and various risks associated with the project are identified and documented. Conventionally, in many projects, the business requirements and the technical requirements, based on the business requirements, are often identified and defined manually. Since, the mapping of business requirements and technical requirements of a project, identification of the associated risks and constraints are done manually and subject to expertise and experience of the project members, a scope for human error always exists. If any discrepancy between the business requirements and the technical requirements is not rectified at an early stage, the project may need rework. This may not only involve extra man hours and overshooting the timeline and budget but also dissatisfaction to the client.

Further, many tasks associated with a project involve preparation of reports, logs, and documentation of completed and pending activities. Further the same has to be communicated to various stakeholders of the project at regular time intervals. These tasks are usually time consuming and prevents the project members from focusing on their core competencies. For example, based on feedback provided by client, a database designer may change the schema of a database. However, documenting the same for review by the project leader, notifying the software developers of the change is usually time consuming and may prevent the database designer from focusing on tasks which utilize his core competency. Thus a majority of projects usually overshoot their budget, miss deadlines of deliverables and dissatisfy the client.

The present subject matter describes systems and methods for managing projects, such as software development projects, in an organization. It should be appreciated by those skilled in the art that though the systems and methods for project management are described in the context of managing software development projects in an organization, the same should not be construed as a limitation. For example, the systems and methods for software development projects in an organization may be implemented for various other purposes, such as in construction projects, and projects of the manufacturing industry.

In one implementation, the computer implemented method of managing projects in an organization, implemented by a project delivery system, includes obtaining details pertaining to the project. In one implementation, various stakeholders like project members; comprising business analysts, system analysts, software developers, software testers, and system architects may provide various details pertaining to the project. The project details may include scope of the project in form of a project scope definition, a set of project business requirements, and a set of project technical requirements. The set of project technical requirements is usually developed based on the set of project business requirements. For example, the business analysts may provide business requirements of the project as project business requirements set, whereas the system analysts may provide the technical requirements of the project as project technical requirements set based on the business requirements provided by the business analysts. Based on the technical requirements set and the business requirements set, various reports, such as a requirement catalogue indicative of the requirements of the project, may be generated, based on pre-defined or user defined rules.

Based on the generated requirement catalogue, one or more of the software testers, for example, say the test lead, prepares one or more test requirement reports. The test requirement reports may also be referred to as project test requirements set. In said implementation, the method may facilitate receiving of one or more test requirement reports indicative of test scenarios, test objectives, and test cases to ensure that the project fulfills all the requirements mentioned in the requirement catalogue. In one implementation, the test scenarios, test objectives and test cases may be mapped to the requirements of the project based on project analysis rules. In said implementation, the method may further comprise determining whether all the requirements of the project are being tested or not. In one example, the various stakeholders may be notified in case one or more of the business and technical requirements of the project are not covered by the test requirements set. The project test requirements set may thus include test cases, test scenarios, test conditions and so on for the said project.

Further, the technical requirements set, the business requirements set, and the test requirements set are analyzed based on one or more project analysis rule so as to determine an inconsistency parameter. The inconsistency parameter may be indicative of the inconsistencies present in the technical requirements set, the business requirements set, and the test requirements set. In one implementation, the project members may be provided with documentation of the technical requirements set, the business requirements set, the test requirements set and detailed depiction of the inconsistencies for further analysis. The project members may then amend at least one of the technical requirements set, the business requirements set, and the test requirements so as to eliminate the detected inconsistencies.

In one example, the method further comprises generating at least one of a system design report and a business design report for completion of the project, based on the analysis of the technical requirements set and the business requirements set. The generated system design report may be amended by the project members based on their personal experience and expertise. In one implementation, the project members may provide details pertaining to application modules and functions associated with the project to facilitate the generation of at least one of the system design report and the business design report. In said implementation, the method may comprise generating a project estimate report indicative of estimated resources to be consumed by the project, timelines of the project and list of deliverables to the client.

In one implementation, the method may further comprise generating workflows for completion of the project; based on the system design report and business design report. Each of the generated workflows may comprise one or more business process which may be allocated to one or more of the project members. Since, the various reports and documents are system generated, the project members would be able focus their core competencies on completing the project instead of spending valuable man-hours in developing reports and documentation related work.

Further, the method may comprise generating a project status index indicative of the status of the project. The status of the project may include details of modules of the project which have been completed, are in progress, and are to be worked on. The project status would provide all stakeholders associated with the project with a holistic view of the progress of the project. Further, the project status report may provide visibility to the management of the organization regarding the degree of completeness of the project, and the estimated time required to complete the project. The project status report may also help to identify whether the project has deviated from its planned path, and facilitate the stakeholders to align the project with the planned project path.

In said implementation, the method may facilitate storing of the data generated during the lifetime of the project, such as documents and reports and communications made pertaining to the project, such as e-mails, brochures, and calls. This provides for easy traceability of data. In one example, a traceability report may be generated at regular intervals to facilitate tracing of data pertaining to the project. In another example, a project estimate document may be generated wherein estimates pertaining to various project parameters may be indicated. Further, the stored reports and documents of the project may act as a reference to similar projects that may be assigned to the organization in the future. This facilitates faster processing of the similar future projects and enhances business intelligence of the organization.

Thus, the systems and methods for managing projects, such as software development projects, in an organization facilitate the managing and monitoring of projects in the organization. The said systems and methods facilitates generation of reports and documentation of various aspects of the project based on pre-defined project analysis rules and helps the project members to focus on their core competencies and expertise. These and other features of the present subject matter would be described in greater detail in conjunction with the following figures. While aspects of described systems and methods for managing projects can be implemented in any number of different computing systems, environments, and/or configurations, the embodiments are described in the context of the following exemplary system(s).

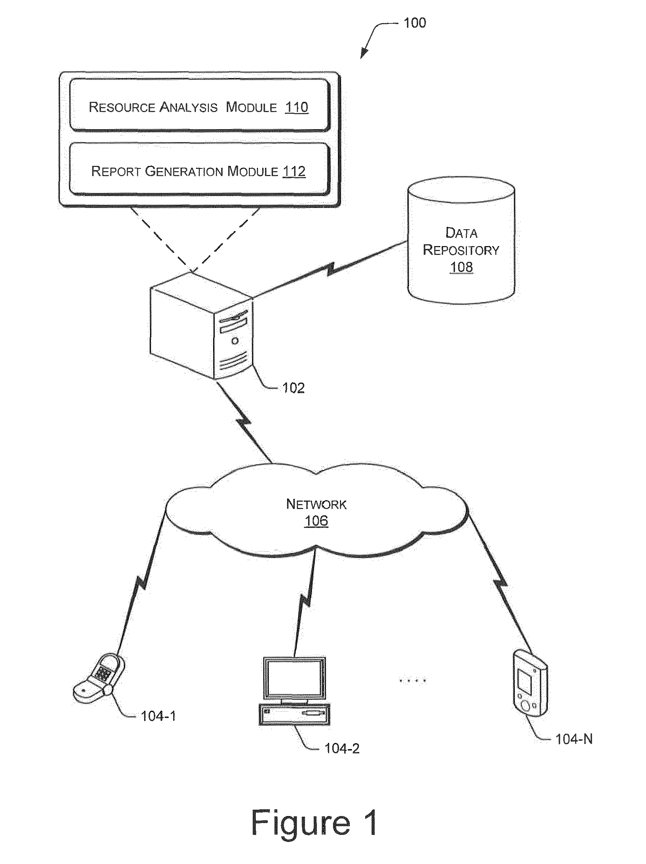

Figure 1 illustrates a network environment 100 implementing a project delivery system 102, according to an embodiment of the present subject matter. In said embodiment, the network environment 100 includes the project delivery system 102 configured for managing projects, such as software development projects, in an organization. In one implementation, the project delivery system 102 may be included within an existing information technology infrastructure of an organization. For example, the project delivery system 102 may be interfaced with the existing content and document management system(s), database and file management system(s), of the enterprise.

The project delivery system 102 may be implemented in a variety of computing systems, such as a laptop computer, a desktop computer, a notebook, a workstation, a mainframe computer, a server, a network server, and the like. It will be understood that the project delivery system 102 may be accessed by various stakeholders of the project through one or more client devices 104-1, 104-2, 104-3 ..... 104-N, collectively referred to as client devices 104. Examples of the client devices 104 include, but are not limited to, a desktop computer, a portable computer, a mobile phone, a handheld device, a workstation. The client devices 104 may be used by various stakeholders of the project, such as project manager, project leader, project members, members of the management of the organization, system administrators and the client who may have assigned the project to the organization. As shown in the figure, such client devices 104 are communicatively coupled to the project delivery system 102 through a network 106 for facilitating one or more stakeholders to access and operate the project delivery system 102.

The network 106 may be a wireless network, wired network or a combination thereof. The network 106 can be implemented as one of the different types of networks, such as intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), etc., to communicate with each other. Further, the network 106 may include a variety of network devices, including routers, bridges, servers, computing devices, storage devices, etc.

In one implementation, the project delivery system 102 is communicatively coupled to a data repository 108 either directly or through the network 106. The data repository 108 may store or provide access to various details pertaining to previous projects completed in the organization. In the embodiment depicted in Figure 1, the data repository 108 is depicted as a separate database coupled to the project delivery system 102, however, it will be appreciated that in various other embodiments, the data repository 108 may be integrated within the data repository 108, for example, project data may be stored in a memory component of the project delivery system 102.

In operation, the project members, such as business analysts, system analysts, software developers, software testers, and system architects provide the project delivery system 102 with various project details pertaining to the project. The project details may include scope of the project, a set of project business requirements, and a set of project technical requirements. For example, a business analyst may use the client device 104-1 to provide the project business requirement set to the project delivery system. The system analyst may communicate with the project delivery system 102 to view the project business requirement set provided by the business analyst, and based on the same provide the project technical requirement set to the project delivery system 102. Further, the test lead may login to the project delivery system 102 using the client device 102-3 and, based on the project technical requirements set and the project business requirements set; provide the project delivery system with the test requirements set. In one example, a requirement analysis module 110 may be configured to receive the various requirements of the project and analyze the same to as to determine any inconsistencies in the requirements. For example, the requirement analysis module 110 may notify one or more stakeholders if a business requirement is not mapped with a technical requirement and so on. Further based on the provided technical requirements set and business requirements set, a report generation module 112 may be configured to generate a requirement catalogue indicative of the requirements of the project, may be generated. In another implementation, the requirement catalogue may be received by the client, based on which technical solution and business solution may be generated.

The project delivery system 102 may be configured to analyze the technical requirements set and the business requirements set, based on one or more project analysis rule so as to determine an inconsistency parameter. For example, the project analysis rule may determine an inconsistency when a technical requirement or a business requirement is not linked with at least one technical solution and business solution. The inconsistency parameter may be indicative of the inconsistencies present in the technical solution set and the business solution set.

In said implementation, as mentioned earlier, the requirement analysis module 112 may be further configured to receive from the project members one or more test requirement reports indicative of test scenarios, test objectives and test cases to ensure that the project fulfills all the requirements mentioned in the requirement catalogue. In said implementation, the test scenarios, test objectives, and test cases may be mapped to the requirements of the project based on project analysis rules. Thus, the project analysis rules may also be understood to integrate various project detail components. Further, based on the analysis of the technical requirements set, the business requirements set, and the test requirements, the project delivery system 102 may be configured to determine one or more inconsistency parameters, indicative of the inconsistencies present in the technical requirements set and the business requirements set. In one implementation, the report generation module 112 may be configured to generate an inconsistency report depicting the detected inconsistency parameters.

Based on the generated inconsistency report, the project members may take corrective actions for elimination of the detected inconsistencies. For example, the system analyst may amend the project technical requirements set to eliminate the inconsistencies and align the project technical requirements set with the project business requirements set. In another example, the test lead may amend the test requirements set to eliminate the inconsistencies detected in the test requirements set.

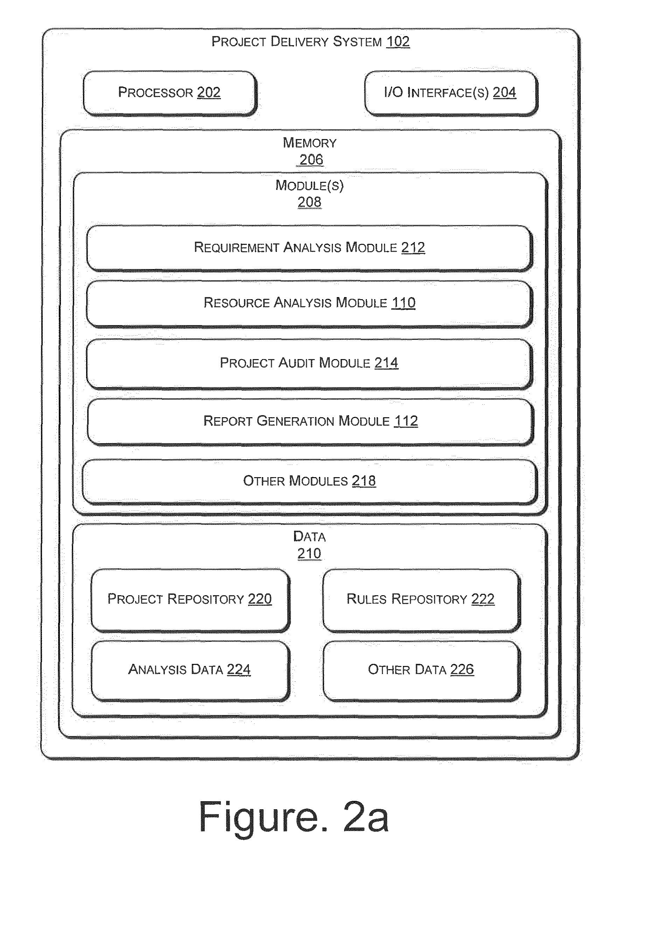

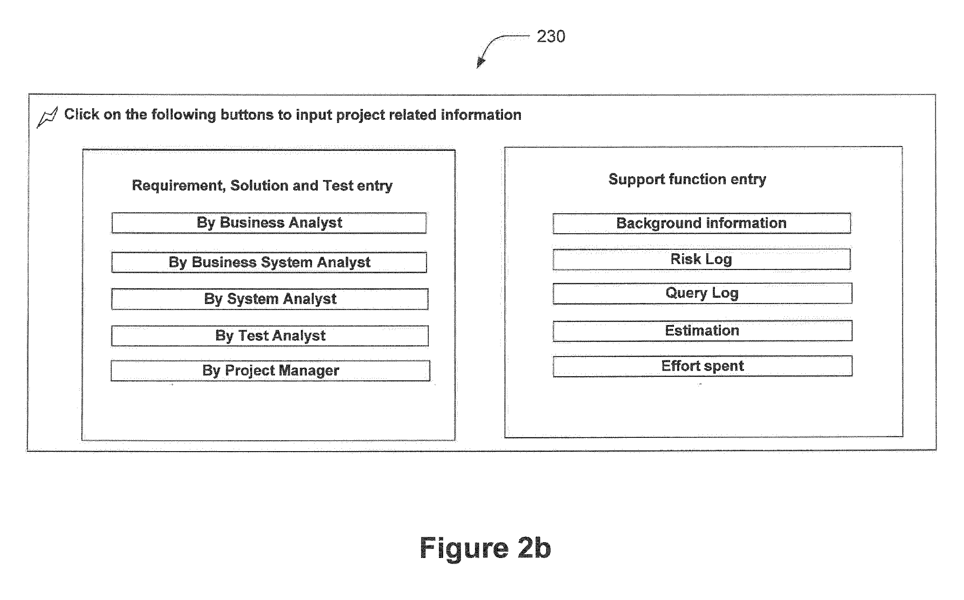

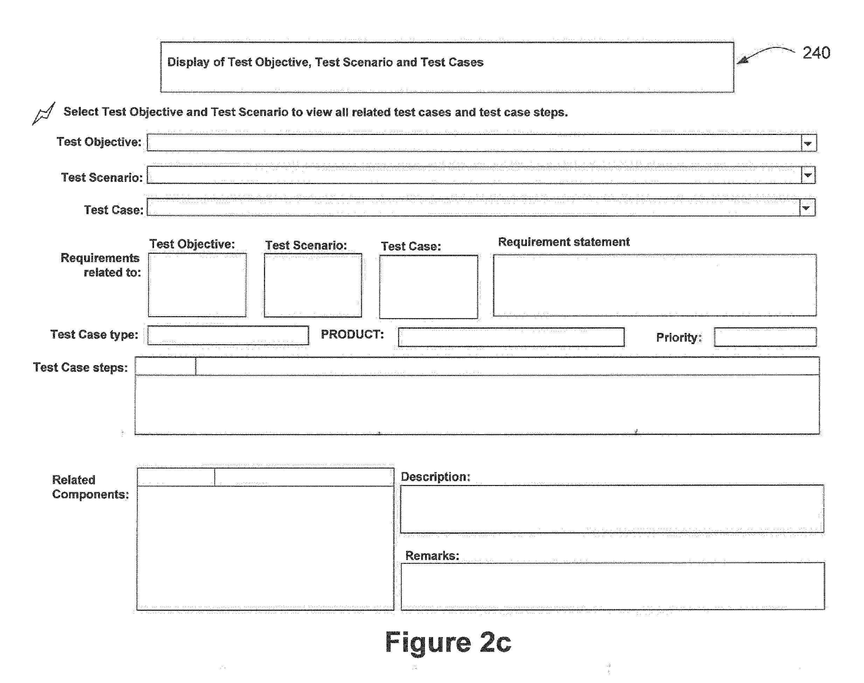

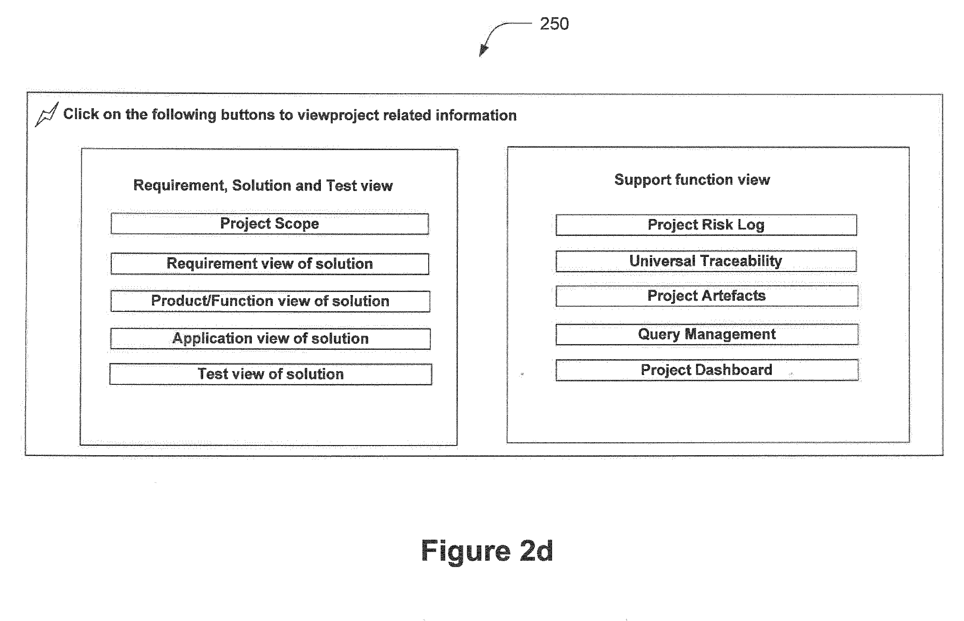

Thus the project delivery system 102 facilitates the management as well as monitoring of the requirements of the project. The project delivery system 102 thus facilitates efficient planning of the projects and better allocation of resources. By eliminating inconsistencies at the initial phase of the project, the project delivery system 102 saves rework and helps in completion of a project within the timeline and budget constraints. These and other features of the project delivery system 102 have been explained in greater detail in conjunction with figure 2.

Figure 2a illustrates the exemplary components of the project delivery system 102, according to an embodiment of the present subject matter, whereas Figures 2b, 2c, 2d, illustrates various user interfaces generated by the project delivery system 102 to facilitate managing projects in the organization. In one embodiment, the project delivery system 102 includes a processor 202, I/O interface(s) 204, and a memory 206 coupled to the processor 202. The processor 202 may be implemented as one or more microprocessors, microcomputers, microcontrollers, digital signal processors, central processing units, state machines, logic circuitries, and/or any devices that manipulate signals based on operational instructions. Among other capabilities, the processor 202 is configured to fetch and execute computer-readable instructions stored in the memory 206.

The I/O interface(s) 204 may include a variety of software and hardware interfaces, for example, a web interface, a graphical user interface, etc., allowing the project delivery system 102 to interact with the client devices 104. Further, the interface(s) 204 may enable the project delivery system 102 to communicate with other computing devices, such as web servers and external data servers (not shown in figure). The I/O interface(s) 204 can facilitate multiple communications within a wide variety of networks and protocol types, including wired networks, for example, LAN, cable, etc., and wireless networks, such as WLAN, cellular, or satellite. The I/O interface(s) 204 may include one or more ports for connecting a number of devices to each other or to another server.

The memory 206 can include any computer-readable medium known in the art including, for example, volatile memory (e.g., RAM), and/or non-volatile memory (e.g., EPROM, flash memory, etc.). In one embodiment, the memory 206 includes module(s) 208 and data 210. The module(s) 208 usually includes routines, programs, objects, components, data structure, etc., that perform particular task or implement particular abstract data types.

In one implementation, the modules 208 further include a requirement analysis module 212, the resource analysis module 110, a project audit module 214, and the report generation module 112. The modules 208 may also include other modules 218 for providing various other functionalities of the project delivery system 102. It will be appreciated that such modules may be represented as a single module or a combination of different modules. Additionally, the memory 206 further includes data 210 that serves, amongst other things, as a repository for storing data fetched, processed, received and generated by one or more of the modules 208. In one implementation, the data 210 may include, for example, project repository 220, rules repository 222, analysis data 224, and other data 226. In one embodiment, the data 210 may be stored in the memory 206 in the form of data structures. Additionally, the aforementioned data can be organized using data models, such as relational or hierarchical data models.

As mentioned earlier, the project delivery system 102 may be accessed by various stakeholders of project management using the client devices 104. In operation, the requirement analysis module 212 may be configured to receive project details, which may include scope of the project, a set of project business requirements, and a set of project technical requirements. In one implementation, the non-functional requirements may also be provided to the requirement analysis module 212. The requirement analysis module 212 may be further configured to receive details pertaining to the application modules associated with the project, and details of functions associated with each of the application modules. In one implementation the requirement analysis module 212 may provide a user interface to the client devices 104, such as the data entry graphical user interface (DE-GUI) 230 depicted in Figure 2b.

Upon receiving the various requirements, the resource analysis module 110 may be configured to retrieve various project analysis rules from the rules repository 222 and analyze the technical requirements set and the business requirements set, based on the project analysis rules. In one implementation, the report generation module 112 may be configured to generate a requirement catalogue indicative of the requirements of the project. Table -1 shows an exemplary depiction of the requirement catalogue.

**Table- 1**

| Requirement ID | Requirement Description | Priority | Remarks | Date of Capture | Relationship with other Requirement |
|---|---|---|---|---|---|
| 1.1-1 | ABCD | High | | 1 Jan 2012 | No Dependency |
| 1.1-2 | EFGH | Medium | | 1 Jan 2012 | No Dependency |

In the Table-1 depicted above, the Requirement ID indicates a unique identification code for each requirement and the Requirement Description provides a brief description of the requirement. Further, the date of capture of the requirement, along with its priority is also stored. The priority may be indicative of the importance of fulfillment of the requirement. Further, any inter-relationship between the requirements may also be defined in the requirement catalogue.

In one implementation, the analysis of the requirement analysis module 212 may be transmitted to the report generation module 112. The report generation module 112 may be configured to generate at least one of a system design document and a business design document based on the analysis. Table-2a and Table 2b show exemplary depictions of the system design requirement and business design requirement respectively. Table-2a and Table 2b may be implemented for example in the form of documents, spreadsheets, extensible markup language (XML) document and so on.

**Table -2a**

| **Application Name: ABC (Addition)** | | |
|---|---|---|
| **Application Name: XYZ (Amendment)** | | |
| | Component Type : Communication | |
| | Component Name: Switch and redirection confirmation letter | |
| | | Logic related to Component: |
| | | Data related to Component: |

In the above depicted Table-2a, the application name denotes the names of application module to which the system design requirement pertains to. The component type denotes the classification of the component. For example, the component type may be communication indicating the component pertains to communication within the stakeholders of the project. The component name depicts the name of the component. Further any logic, say in from of program specification, and data, say, in form of table specification, associated with the component is also described in the system design requirement.

**Table -2b**

| Application: XYZ (Addition) | | | |
|---|---|---|---|
| | Product List : | | |
| | 1.Collective Pension | | |
| | 2.Critical Illness Cover | | |
| | 3.Investment Bond | | |
| | | Function List: | |
| | | 1. Agency management (Amendment) | |

| | | | Screen : |
|---|---|---|---|
| | | | Business Data: |
| | | | Business Rule : |
| | | | Communications : |
| | | | Message : |
| | | | Interface : |
| | | | Report : |
| | | | Utility : |
| | | | |

| | | 2. Application (Amendment) | |
|---|---|---|---|
| | | | Screen : |
| | | | Business Data: |
| | | | Business Rule : |
| | | | Communications : |
| | | | Message : |
| | | | Interface : |
| | | | Report : |
| | | | Utility : |
| | | | |

| | | 3. Case management (Amendment) | |
|---|---|---|---|
| | | | Screen : |
| | | | Business Data: |
| | | | Business Rule : |
| | | | Communications : |
| | | | Message : |
| | | | Interface : |
| | | | Report : |
| | | | Utility : |
| | | | |

| | | 4. Customer enquiry (Amendment) | |
|---|---|---|---|
| | | | Screen : |
| | | | Business Data: |
| | | | Business Rule : |
| | | | Communications : |
| | | | Message : |
| | | | Interface : |
| | | | Report : |
| | | | Utility : |
| | | | |

| | | 5. Customer update (Amendment) | |
|---|---|---|---|
| | | | Screen : |
| | | | Business Data: |
| | | | Business Rule : |
| | | | Communications : |
| | | | Message : |
| | | | Interface : |
| | | | Report : |
| | | | Utility : |
| | | | |

| | | 6. Fact find and need analysis (Amendment) | |
|---|---|---|---|
| | | | Screen : |
| | | | Business Data: |
| | | | Business Rule : |
| | | | Communications : |
| | | | Message : |
| | | | Interface : |
| | | | Report : |
| | | | Utility : |
| | | | |

| | | 7. Fund Switch (Amendment) | |
|---|---|---|---|
| | | | Screen : |
| | | | Business Data: |
| | | | Business Rule : |
| | | | Communications : |
| | | | Message : |
| | | | Interface : |
| | | | Report : |
| | | | Utility : |
| | | | |

| | | 8. Login (New) | |
|---|---|---|---|
| | | | Screen : |
| | | | Business Data: |
| | | | Business Rule : |
| | | | Communications : |
| | | | Message : |
| | | | Interface : |
| | | | Report : |
| | | | Utility : |
| | | | |

| | | 9. Offline fact find (Amendment) | |
|---|---|---|---|
| | | | Screen : |
| | | | Business Data: |
| | | | Business Rule : |
| | | | Communications : |
| | | | Message : |
| | | | Interface : |
| | | | Report : |
| | | | Utility : |
| | | | |

| | | 10. Policy administration (Amendment) | |
|---|---|---|---|
| | | | Screen : |
| | | | Business Data: |
| | | | Business Rule : |
| | | | Communications : |
| | | | Message : |
| | | | Interface : |
| | | | Report : |
| | | | Utility : |
| | | | |

| | | 11. Policy Valuation (Amendment) | |
|---|---|---|---|
| | | | Screen : |
| | | | Business Data: |
| | | | Business Rule : |
| | | | Communications : |
| | | | Message : |
| | | | Interface : |
| | | | Report : |
| | | | Utility : |
| | | | |

| | | 12. Quotation (Amendment) | |
|---|---|---|---|
| | | | Screen : |
| | | | Business Data: |
| | | | Business Rule : |
| | | | Communications : |
| | | | Message : |
| | | | Interface : |
| | | | Report : |
| | | | Utility : |
| | | | |

| | | 13. Single sign on (Amendment) | |
|---|---|---|---|
| | | | Screen : |
| | | | Business Data: |
| | | | Business Rule : |
| | | | Communications : |
| | | | Message : |
| | | | Interface : |
| | | | Report : |
| | | | Utility : |

| Application: ABC (Amendment) | | | |
|---|---|---|---|
| | Product List : | | |
| | 1.Collective Pension | | |
| | 2.Critical Illness Cover | | |
| | 3.Investment Bond | | |

| | | Function List: | |
|---|---|---|---|
| | | 1. Brand (New) | |
| | | | Screen : |
| | | | Business Data: |
| | | | Business Rule : |
| | | | Communications : |
| | | | Message : |
| | | | Interface : |
| | | | Report : |
| | | | Utility : |
| | | | |

| | | 2. Login (New) | |
|---|---|---|---|
| | | | Screen : |
| | | | Business Data: |
| | | | Business Rule : |
| | | | Communications : |
| | | | Message : |
| | | | Interface : |
| | | | Report : |
| | | | Utility : |
| | | | |

| | | 3. Quotation (Amendment) | |
|---|---|---|---|
| | | | Screen : |
| | | | Business Data: |
| | | | Business Rule : |
| | | | Communications : |
| | | | Message : |
| | | | Interface : |
| | | | Report : |
| | | | Utility : |
| | | | Message : |
| | | | Interface : |
| | | | Report : |
| | | | Utility : |

In the above depicted Table -2b, the various parameters associated with business design are defined. The product list defines for which the business design requirement is applicable, whereas the function list enumerates the functions associated with the business design requirement. Further, each function may comprise of one or more sub-functions. For example, as depicted in the above table, each function may be associated with a user interface or a screen, business data, business rule, communications, messages and reports. Further the utility of each business requirement may also be mentioned.

In one implementation, the project audit module 214 may be configured to an inconsistency parameter indicative of inconsistencies in the system design and business design. The inconsistency parameter may be indicative of the inconsistencies present in the technical requirements set and the business requirements set. In one implementation, the report generation module 112 may be configured to generate an inconsistency report based on the inconsistencies detected by the project audit module 214. Table 3 shows exemplary depictions of the system design inconsistency report and business design inconsistency report respectively

### Errors:

**Table- 3**

| Component | Component Details | Remarks |
|---|---|---|
| Communication | Switch and redirection confirmation letter | Communication not linked to application change |
| Message | Unauthorized requester | Message not linked to application change |
| Screen | ABC | Screen not linked to application change |
| Interface | INT-1 | Interface not linked to application change |
| Message | Unauthorized requester | Message not related to solution |

In the above table, the component provides the name of the component in which the inconsistency has been detected; whereas component details provide a brief description of the component. The remarks provide for the details inconsistencies detected, such as absence of linkage or missing relationship between various components or a component which is not linked to any other component.

In said implementation, the resource analysis module 110 may be further configured to receive of one or more test requirement reports or indicative of the test components, i.e., test scenarios, test objectives and test cases to ensure that the project fulfills all the requirements mentioned in the requirement catalogue. A test case usually comprises a unique identifier; requirement references from a design specification, such as the business design document; preconditions, events, a series of steps to follow, input, output, expected result, and actual result. The test scenarios are used for scenario testing, which is a software testing activity that uses scenarios or hypothetical stories to help the tester work through a complex problem or test system. The ideal test scenario is usually a credible, complex, compelling or motivating story the outcome of which is easy to evaluate. In one implementation, the requirement analysis module 212 may be configured to generate a user interface, such as a test details entry user interface 240 as depicted in Figure 2c.

In one implementation, the test scenarios, test objectives and test cases may be mapped to the requirements of the project based on project analysis rules. Based on the mapping done by the requirement analysis module 212, the report generation module 112 may be configured to generate at least one of a test coverage report and test specification report. Further, table 4a and Table 4b show exemplary depictions of the test specification report and the test coverage report respectively. The test specification report and the test coverage report are collectively referred to as the test reports.

**Table -4a**

| Test Case details: | | | | |
|---|---|---|---|---|
| **Test Objective: ABC** | | | | |
| | **Test Scenario 1:** Policy valuation | | | |
| | **Test Scenario 2:** Customer enquiry | | | |
| | **Test Scenario 3:** Customer update | | | |
| | **Test Scenario 4:** Quotation | | | |
| | **Test Scenario 5:** Application | | | |
| | **Test Scenario 6:** Fund switch | | | |
| | **Test Case 1:** Policy having one fund being switched to another fund. | | | |
| | | **Priority:** High | | |
| | | **Test case Type:** Main | | |
| | | **Product:** Investment Bond | | |
| | | **Test Case step- 1:** perform switch transaction | | |

| **Component Name** | | | **Component Description** | **Remark** |
|---|---|---|---|---|
| | | Test Case step- 2: Check Post Processing | | |
| **Test Case 2:** Normal fund switch involving multiple switch out fund and single switch in fund | | | | |
| | | **Priority:** High | | |
| | | **Test case Type:** Main | | |
| | | **Product:** Investment Bond | | |
| | | **Test Case step-1:** perform switch transaction | | |

| **Component Name** | | | **Component Description** | **Remark** |
|---|---|---|---|---|
| | | | | |
| | | **Test Case step- 2:** Check Post Processing | | |

| **Component Name** | | | **Component Description** | **Remark** |
|---|---|---|---|---|
| | | | | |
| | **Test Case 3:** Attempt a switch where policy has a pending action on it (WIP) | | | |
| | | **Priority:** High | | |
| | | **Test case Type:** Exception | | |
| | | **Product:** Investment Bond | | |
| | | **Test Case step-1:** Attempt a switch on WIP policy | | |

| **Component Name** | | | **Component Description** | **Remark** |
|---|---|---|---|---|
| **Test Case 4:** Normal fund switch involving single switch out fund and multiple switch in fund | | | | |
| | | **Priority:** High | | |
| | | **Test case Type:** Main | | |
| | | **Product:** Investment Bond | | |
| | | **Test Case step-1:** Perform Switch Transaction | | |

| **Component Name** | | | **Component Description** | **Remark** |
|---|---|---|---|---|
| | | **Test Case step- 2:** Check post processing | | |

| **Component Name** | | | **Component Description** | **Remark** |
|---|---|---|---|---|
| | **Test Scenario 7:** Remainder Policy admin initiated in IO | | | |
| | **Test Scenario 8:** Agency management initiated in IO | | | |
| | **Test Scenario 9:** Case management initiated in IO | | | |
| **Test Objective: Non functional requirements must be satisfied (end to end)** | | | | |

**Table -4b**

| Component | Coverage | No. of Test cases | No. of Instances of component |
|---|---|---|---|
| Requirement | Test cases covering requirements | 4 | 19 |
| Requirement | Test cases not covering any requirements | 0 | 0 |
| Requirement | Requirements not covered by any Test case | 0 | 347 |
| Function | Test cases covering Function | 3 | 1 |
| Function | Test cases not covering any Function | 1 | 0 |
| Function | Function not covered by any Test case | 0 | 14 |
| Application | Test cases covering Application | 4 | 4 |
| Application | Test cases not covering any Application | 0 | 0 |
| Application | Application not covered by any Test case | 0 | 14 |
| Business Rule | Test cases covering Business rule | 3 | 1 |
| Business Rule | Test cases not covering any Business Rule | 1 | 0 |
| Business Rule | Business rule not covered by any Test case | 0 | 0 |
| Business Data | Test cases covering Business Data | 3 | 5 |
| Business Data | Test cases not covering any Business Data | 1 | 0 |
| Business Data | Business Data not covered by any Test case | 0 | 0 |
| Significant Business Data value | Test cases covering Significant Business Data value | 3 | 6 |
| Significant Business Data | Test cases not covering any Significant Business Data | 1 | 0 |
| Significant Business Data value | Significant Business Data value not covered by any Test case | 0 | 1 |

In the above depicted Table-4b, the component denotes the name of the component whose test coverage is described, whereas the coverage provides a brief description of the coverage of the testing for the said component. The number of test cases column indicates the number of test cases defined for the said component; whereas the number of instances of the component provides the count of times the component is being used in these test cases.

In one implementation, the project audit module 214 may be configured to generate various logs either at regular time intervals or on user demand. For example, the project audit module 214 may analyze the various project details to identify risks associated with the project and based on the same generate a risk log. Table 5 depicts an exemplary risk log generated by the project audit module 214. In the table -5, risk type may be indicative of the type of risk; for example assumption, issue, dependency, constraint, etc. The risk description column provides the detailed description of the risk type; whereas the risk status column indicates whether the risk type data is resolved, closed, newly identified or is being investigated.

**Table -5**

| Risk Type | Risk Description | Risk Status | Remark | Component Type | Component ID | Component Description |
|---|---|---|---|---|---|---|
| Risk | | New | | Application | APP-12 | SOA |
| Risk | | New | | Function | PRC-008 | Single sign on |

In the table 5 depicted above, the risk type, risk status, and risk description indicate the type of risk, the current status of the risk and a brief description of the risk.

In similar manner, the project audit module 214 may be configured to maintain a log of queries executed pertaining to the project. Table 6 depicts an exemplary query log generated by the project audit module 214. In the table 6, the column query type may be indicative of the type of query; such as improvement idea, assumption, Inconsistency, and incorrect. The column marked query description provides a description for the query type. The query status column indicates whether the query type data is resolved, closed, newly identified or is being investigated; whereas the column query resolution stores the response to the query type data.

**Table -6**

| Query Type | Query Description | Query Status | Query Resolution | Component Type | Component ID | Component Description |
|---|---|---|---|---|---|---|
| Query | AAA | New | A | Function | PRC-001 | Fund Switch |
| Improvement Idea | BBB | New | B | Function | PRC-001 | Fund Switch |
| Assumption | CCC | New | C | Function | PRC-001 | Fund Switch |

Further, the project audit module 214 may be configured to trace and track data pertaining to the project. In one example, the project audit module 214 may maintain traceability logs so as to facilitate easy tracking and tracing of data. Table -7 depicts an exemplary traceability log for tracing functions.

**Table -7**

| Function ID | Name | Component Type | Component ID |
|---|---|---|---|
| PRC-001 | Fund Switch | Requirement | 11.1 |
| PRC-001 | Fund Switch | Requirement | 11.1 - 2 |
| PRC-001 | Fund Switch | Requirement | 11.1 - 5 |
| PRC-001 | Fund Switch | Requirement | 11.1 - 5.1 |
| PRC-001 | Fund Switch | Requirement | 11.1 - 5.2 |
| PRC-001 | Fund Switch | Requirement | 11.1 - 5.3 |
| PRC-001 | Fund Switch | Requirement | 11.1 - 5.4 |
| PRC-001 | Fund Switch | Requirement | 11.1 - 5.5 |
| PRC-001 | Fund Switch | Requirement | 11.1 - 6 |
| PRC-001 | Fund Switch | Requirement | 11.1 - 7 |

In one example, the project audit module 214 may be configured to generate a project status index indicative of the status of the project. The status of the project may include details of application modules and functions of the project which have been completed, are in progress, and are to be worked on. Further, the project audit module 214 may be configured to generate mails, which may be sent to stakeholders of the project at regular intervals. Moreover, the project audit module 214 may be configured to keep a track of the accounts pertaining to the project and generate an accounts report at regular intervals.

In one implementation, the various reports and logs generated by the report generation module 112 and the project audit module 214 may be saved in the project repository 220 for future reference and audit purpose. Further the various analysis performed by the requirement analysis module 110 and the resource analysis module 110 may be saved as analysis data 224. The analysis data 224 may be used by the report generation module 112 to generate the various artifacts, such as reports and documentation pertaining to the project.

In one implementation, the project audit module 214 may be further configured to generate a user interface, such as the detailed view user interface 250 depicted in Figure 2d to facilitate the viewing of various details, reports, logs, documents, etc., pertaining to the project, by the various stakeholders of the project.

Thus the project delivery system 102 facilitates managing projects in the organization by integrating various aspects pertaining to the project, such as product, function, business requirement, application, non functional requirement, testing, accounting, communication, reporting and documentation, processes and workflows, and so on.

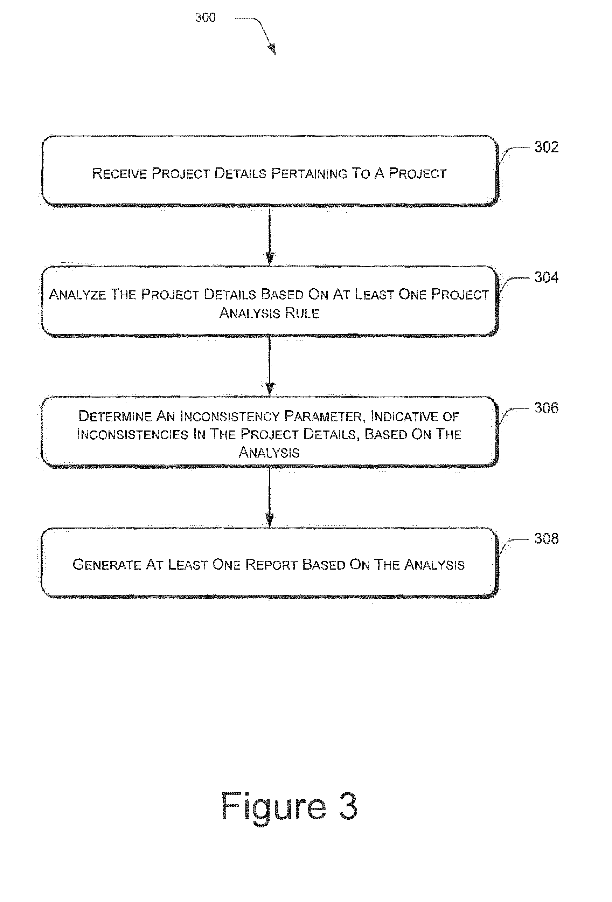

Figure 3 illustrates an exemplary method 300 for managing projects in an organization, according to an embodiment of the present subject matter. The method 300 may be described in the general context of computer executable instructions. Generally, computer executable instructions can include routines, programs, objects, components, data structures, procedures, modules, functions, which perform particular functions or implement particular abstract data types. The method 300 may also be practiced in a distributed computing environment where functions are performed by remote processing devices that are linked through a communication network. In a distributed computing environment, computer executable instructions may be located in both local and remote computer storage media, including memory storage devices.

The order in which the method 300 is described is not intended to be construed as a limitation, and any number of the described method blocks can be combined in any order to implement the method 300, or alternative methods. Additionally, individual blocks may be deleted from the method 300 without departing from the spirit and scope of the subject matter described herein. Furthermore, the method 300 can be implemented in any suitable hardware, software, firmware, or combination thereof.

With reference to method 300 as depicted in Figure 3, as shown in block 302, the project details pertaining to a project is received. The project details may include scope of the project, technical requirements set, business requirements set, non-functional requirements set, application modules, functions associated with the application modules, deliverables of the project, and so on. The project details may also include test requirement reports or indicative of the test components, i.e. test scenarios, test objectives and test cases to ensure that the project fulfills all the requirements. In one implementation, the resource analysis module 110 may be configured to receive various project details from client devices 104 operated by the project members.

As depicted in block 304, the various project details are analyzed based on one or more project analysis rules. The analysis may involve mapping of project requirements with deliverables. Further application modules and functions may also be mapped. In one implementation, the resource analysis module 110 may be configured to retrieve one or more project analysis rules from the rule repository 222 and analyze the project details based on the one or more project analysis rules.

As illustrated in block 306, one or more inconsistency parameters, indicative of the inconsistencies present in the project details, such as the technical requirements set and the business requirements set may be generated. In one implementation, the resource analysis module 110 may be configured to determine the inconsistency parameter based on analysis of the technical requirements set and the business requirements set. In another implementation, the resource analysis module 110 may be configured to determine the inconsistency parameter based on the analysis of system design and the business design of the project.

As shown in block 308, at least one report is generated based on the analysis. In one implementation, the report generation module 112 may be configured to generate various reports, such as the requirement catalogue, business design document, system design document, test specification report, traceability report, inconsistency report, test coverage report, project estimate report, project status report, query log, and risk log.

Thus the project delivery system 102 facilitates managing projects in an organization. The project delivery system 102 generates various documentations and reports pertaining to the project at regular intervals or on demand; and thus facilitates the project members to concentrate of their core competencies. Further, the project delivery system 102 stores the various reports and logs generated for a project for future reference, thus facilitating faster processing of similar future projects and enhancing business intelligence of the organization.

## Claims

1. A computer implemented method for delivering a software development project, the method comprising:
obtaining project detail components comprising at least one of a project scope definition, a project business requirements set, a project technical requirements set, and a project test requirements set;
retrieving, from a rule repository, at least one project analysis rule pertaining to the project, wherein the at least one project analysis rule integrates a plurality of the project detail components of the project details;
analyzing the project detail components, based on the at least one project analysis rule;
determining, based on the analyzing, an inconsistency parameter indicative of inconsistencies present in at least one of the project scope definition, the project business requirements set, and the project technical requirements set; and
creating a system design report for completion the project based in part on the analyzing.

2. The method as claimed in claim 1, wherein the obtaining further comprises receiving at least one of details of application modules, and details of functions associated with the project.

3. The method as claimed in claim 1, wherein the obtaining further comprises at least one of receiving test components, wherein the test components comprise at least one of test objectives and test scenarios and receiving test cases.

4. The method as claimed in claim 3, wherein the method further comprises defining an interrelationship between the project details and the test components.

5. The method as claimed in claim 1, wherein the creating further comprises generating at least one of a business design report, a requirement catalogue, a traceability report, and a test report.

6. The method as claimed in claim 1, wherein the creating further comprises generating at least one of a technical design document, a business design document, a project estimate document, a risk log, and a query log.

7. The method as claimed in claim 1, wherein the method further comprises computing a project status index, indicative of the status of the project, based on the at least one project analysis rule.

8. The method as claimed in claim 1, wherein the creating further comprises generating workflow for completion of the project, wherein the workflow comprises one or more business processes.

9. The method as claimed in claim 1, wherein the creating further comprises generating an accounts report, indicative of the accounts pertaining to the project.

10. A project delivery system (102), configured to manage a software development project over a communication network, comprising:
a processor (202); and
a memory (206) coupled to the processor (202), the memory (206) comprising
a resource analysis module (110) configured to, obtain project detail components comprising at least one of a project scope definition, a project business requirements set, a project technical requirements set, and a project test requirements set;
a requirement analysis module (212) configured to, retrieve, from a rule repository (222), at least one project analysis rule, pertaining to the project, wherein the at least one project analysis rule integrates a plurality of the project detail components of the project details;
analyze the project detail components, based on the at least one project analysis rule;
determine, based on the analyzing, an inconsistency parameter, indicative of inconsistencies present in at least one of the project scope definition, the project business requirements set, and the project technical requirements set; and
a report generation module (112) configured to
create a system design report for completion the project based in part on the analyzing.

11. The project delivery system (102) as claimed in claim 10, wherein the resource analysis module (110) is further configured to obtain at least one of details of application modules, and details of functions associated with the project.

12. The project delivery system (102) as claimed in claim 10, further comprising a project audit module (214) configured to compute a project status index, indicative of the status of the project, based on the at least one project analysis rule.

13. The project delivery system (102) as claimed in claim 12, wherein the project audit module (216) is further configured to generate workflow for completion of the project, wherein the workflow comprises one or more business processes.

14. The project delivery system (102) as claimed in claim 10, wherein the report generation module (112) is further configured to generate at least one of a technical design document, a business design document, a project estimate document, a risk log, and a query log.

15. A computer-readable medium having embodied thereon a computer program for executing a method comprising:
obtaining project detail components comprising at least one of a project scope definition, a project business requirements set, a project technical requirements set, and a project test requirements set;
retrieving, from a rule repository, at least one project analysis rule, pertaining to the project, wherein the at least one project analysis rule integrates a plurality of the project detail components of the project details;
analyzing the project detail components, based on the at least one project analysis rule;
determining, based on the analyzing, an inconsistency parameter, indicative of inconsistencies present in the at least one of the project scope definition, the project business requirements set, and the project technical requirements set; and
creating a system design report for completion the project based in part on the analyzing.
